Europäisches Patentamt

European Patent Office

Office européen des brevets

(19)

(11) Numéro de publication : **0 174 895 B1**

(12)

# FASCICULE DE BREVET EUROPÉEN

(45) Date de publication du fascicule du brevet :
**11.01.89**

(21) Numéro de dépôt : **85401764.7**

(22) Date de dépôt : **11.09.85**

(51) Int. Cl.⁴ : **G 03 B 42/02**

---

(54) **Dispositif mobile permettant de réaliser des radiographies en tout lieu et en toute sécurité d'aseptie.**

---

(30) Priorité : **12.09.84 FR 8414006**

(43) Date de publication de la demande :
**19.03.86 Bulletin 86/12**

(45) Mention de la délivrance du brevet :
**11.01.89 Bulletin 89/02**

(84) Etats contractants désignés :
**CH DE GB IT LI NL**

(56) Documents cités :
**FR--A-- 1 551 182**
**FR--A-- 2 534 704**

(73) Titulaire : **Di Tuoro, Maurice**
**14, rue Charles-Brune**
**F-28160 Brou (FR)**

(72) Inventeur : **Di Tuoro, Maurice**
**14, rue Charles-Brune**
**F-28160 Brou (FR)**

(74) Mandataire : **Flavenot, Bernard**
**Société ABRITT 17, rue du Docteur Charcot La Norville**
**F-91290 Arpajon (FR)**

Jouve, 18, rue St-Denis, 75001 Paris, France

**Description**

La présente invention concerne les dispositifs mobiles pour réaliser des radiographies dans des endroits les plus divers et en toute sécurité d'aseptie, notamment des radiographies d'urgence au lit du malade, en milieu stérile ou en salle de radiodiagnostic.

On connaît déjà par la Demande de Brevet français 2 534 704 un dispositif porte-cassette avec dossier de contention équilibré par des stabilisateurs horizontaux comprenant : un porte-cassette principal, l'ensemble prenant appui par l'intermédiaire d'une jambe de force en forme de « T », une potence supportant un cadre rectangulaire réglable en hauteur maintenu par l'intermédiaire d'une goupille, et une équerre de 90 degrés en « L » comportant un dispositif de support de cassette latérale.

Ce dispositif a offert des possibilités nouvelles très intéressantes de travail de la radiographie en tout lieu mais par contre il peut favoriser dans certaines conditions la contamination en véhiculant d'un endroit à un autre des germes indésirables.

En effet, certains germes se développent en milieu hospitalier, la contamination se faisant bien souvent par des manipulations de toutes sortes, car véhiculée par le personnel soignant utilisant un matériel d'un malade à l'autre. Pourtant la cassette pour la radiographie en contact direct avec le malade en radiographie au lit peut être enveloppée dans une housse, mais ce n'est pas la généralité ni la sécurité.

Le perfectionnement selon l'invention permet d'offrir la possibilité d'apporter les moyens nécessaires pour atteindre le but de l'aseptie avec un dispositif comme celui décrit dans le Brevet Français 2 534 704.

Plus précisément, la présente invention a pour objet un dispositif mobile permettant de réaliser des radiographies en tout lieu et en toute sécurité d'aseptie comportant un trépied, ledit trépied étant constitué d'une pluralité de premiers éléments unitaires assemblables et de moyens commandables pour bloquer lesdits éléments unitaires entre eux pour former ledit trépied, des moyens pour solidariser une cassette de radiographie sur ledit trépied, des moyens pour positionner ledit trépied sur une surface de référence, suivant une orientation donnée, caractérisé par le fait qu'il comporte en outre :

un caisson constitué de seconds éléments emboîtables, ledit caisson ayant des dimensions intérieures déterminées pour enfermer lesdits premiers éléments et/ou au moins une dite cassette de radiographie, et

des moyens commandables de décontamination de l'intérieur dudit caisson.

D'autres caractéristiques et avantages, conformes à l'invention, ressortiront d'ailleurs de la description qui va suivre, donnée en regard des dessins annexés à titre d'exemple illustratif mais nullement limitatif, dans lesquels :

— La Figure 1 est une vue d'ensemble en perspective d'une forme de réalisation sous sa nouvelle formule de conception du trépied,

— La Figure 2 représente une vue postérieure en perspective, le bâti secondaire étant escamoté à l'intérieur du bâti principal,

— La Figure 3 est une vue de détail en perspective du cadre ou plateau rectangulaire désolidarisé de la potence,

— La Figure 4 est une vue de détail en coupe du bâti principal et du bâti secondaire,

— La Figure 5 est une vue en coupe de dessus de l'articulation d'un stabilisateur en forme de « T » adapté au bâti secondaire,

— La Figure 6 est une vue en perspective d'une porte-cassette de type mural,

— La Figure 7 est une vue schématique en perspective d'un manchon carré avec sa fenêtre et son patin de frein adapté à l'orifice,

— La Figure 8 est une vue schématique en perspective d'une bague de guidage avec sa fenêtre et son patin de frein adapté à l'orifice,

— La Figure 9 est une vue en coupe de la potence avec son mécanisme de serrage qui est disposé à l'intérieur de la chandelle du bâti principal,

— La Figure 10 est une vue en coupe de dessus comme indiqué sur la Figure 9,

— La Figure 11 représente la manipulation de déblocage des quatre patins de frein,

— La Figure 12 est une vue en coupe de dessus indiquée sur la Figure 11,

— La Figure 13 est une vue de détail en coupe du mécanisme de blocage d'un tube selon une deuxième variante et comporte un patin de frein mis en serrage permanent,

— La Figure 14 est une vue en coupe du mécanisme selon la Figure 13, représentant le déblocage du patin de frein,

— La Figure 15 est une vue de détail en perspective du boîtier relatif aux Figures 13 et 14, elle montre la disposition du mécanisme de blocage,

— La Figure 16 est une vue en perspective d'un outil de réglage des paramètres de radiographie,

— La Figure 17 est une vue en perspective selon la Figure 16, montrant le positionnement d'une cassette par rapport au bloc radiogène,

— La Figure 18 est une vue schématique qui représente le positionnement du trusquin entre le sujet et la source ionisante, ainsi que la disposition du coulisseau selon les formats des cassettes : x, y, z,

— La Figure 19 est une vue de dessous du centreur lumineux utilisé dans le dispositif selon les Figures 16 et 17,

— La Figure 20 est une vue en perspective de l'ossature du caisson de décontamination,

— La Figure 21 est une vue en perspective d'un caisson monté sur roulettes, ainsi qu'une vue séparée d'un train de deux roulettes,

— La Figure 22 est une vue en élévation du caisson selon les Figures 20 et 21,

— La Figure 23 est une vue partielle en coupe d'un caisson avec des moyens de décontamination, et

— La Figure 24 est une vue en coupe d'un élément des moyens de décontamination selon la Figure 23.

Le mode de réalisation du dispositif comme illustré comprend un bâti principal 1 constitué par un cadre rectangulaire comportant une chandelle 201, un porte-cassette latéral représenté en pointillé, une jambe de force 49. Cette réalisation comporte aussi une potence 2 adaptée à coulisser et à s'immobiliser par le moyen d'un dispositif de blocage permanent, une commande de déblocage par le moyen d'un bouton poussoir 3, autorisant le coulissement de la potence exclusivement pendant le temps de pression.

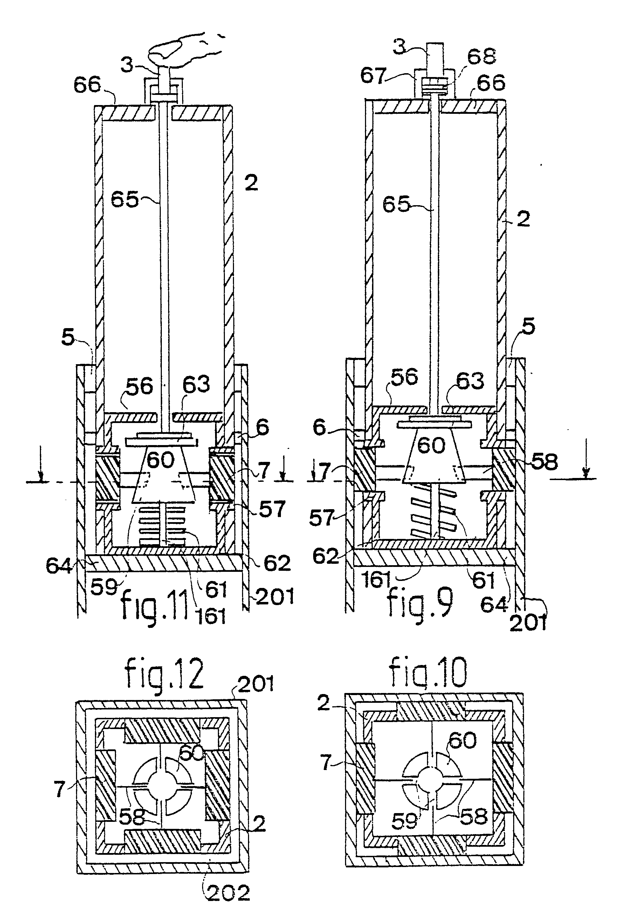

Deux étriers 4 solidaires d'une tige sont aptes à recevoir et à maintenir le cadre rectangulaire. Un manchon carré 5 a pour effet de guider le coulissement de la potence 2 à l'intérieur de la chandelle 201, avec un jeu mécanique faible mais suffisant pour le coulissement de la potence, ce manchon étant collé à l'intérieur de la chandelle au niveau et à fleur de l'orifice 202. Un autre manchon carré 6 est collé à la potence 2, il complète le guidage de la potence. Quatre patins de blocage 7, visibles sur les Figures 8, 9, 10, et 11, permettent de bloquer la potence par rapport à la chandelle 201.

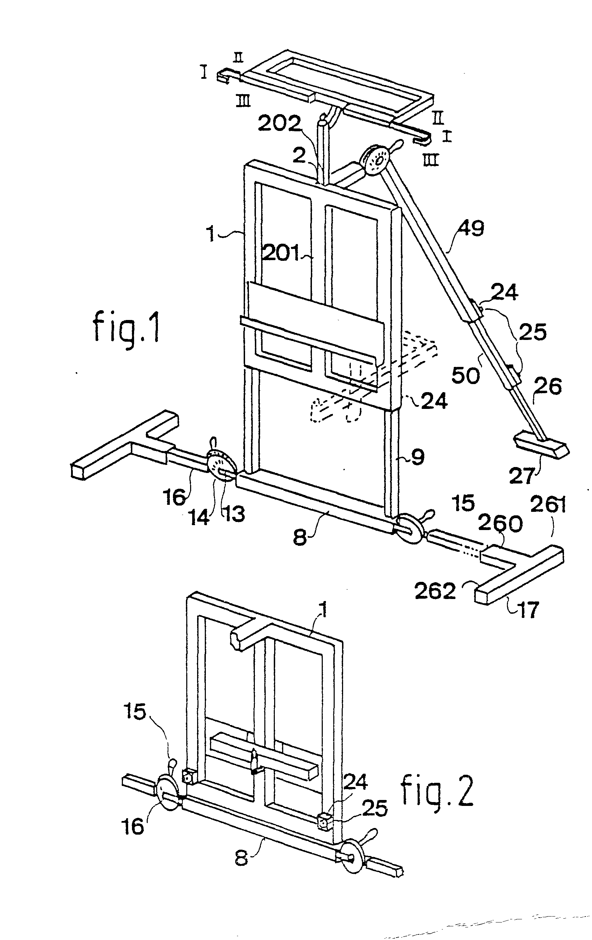

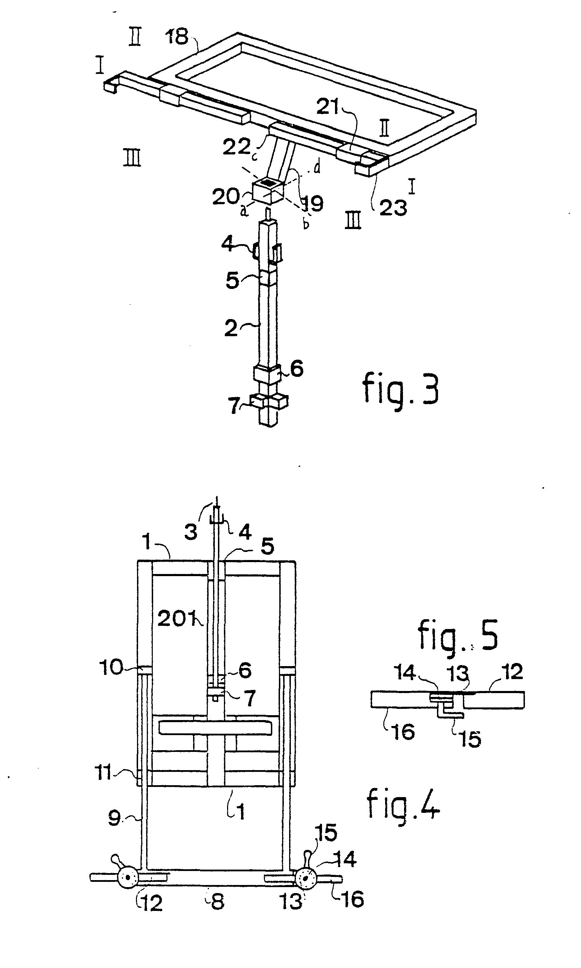

Un bâti secondaire 8 déployé comme le montre la Figure 1 rentre à l'intérieur du bâti principal Figure 2. Ce bâti 8 comporte deux chandelles 9 aptes à coulisser et à s'immobiliser dans le cadre du bâti principal. Une contre-plaque 10 sur le pôle supérieur des deux chandelles 9 permet un coulissement sans jeu mécanique important dans le bâti 1. Un manchon carré 11, Figure 4, disposé à l'intérieur du bâti 1 et à fleur de l'orifice par lequel passent les deux chandelles 9, complète le moyen de guidage.

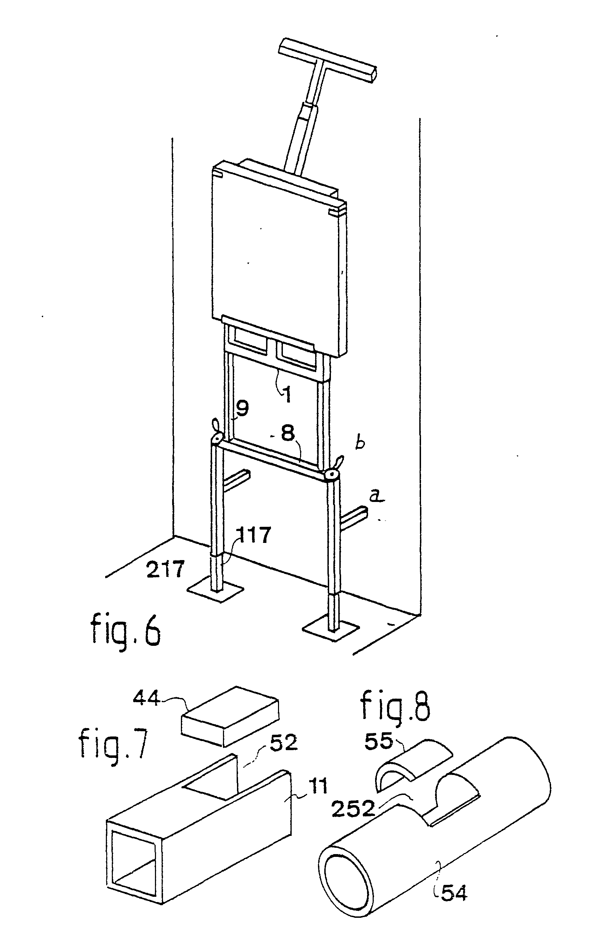

L'embase du bâti secondaire 8 comporte de part et d'autre une pièce de fonderie 16, Figure 5. Cette pièce est rivetée à l'intérieur de l'embase 8, sur un profilé 12, lequel comporte un méplat 13 lié à une demi-coquille crantée de forme circulaire 14, une seconde demi-coquille crantée étant mise en association de crantage avec la première. Le serrage pour la fixation du positionnement est assuré par la manette 15 comportant une tige filetée adaptée à bloquer les deux demi-coquilles. Les pièces de fonderie 16 sont solidaires des secondes demi-coquilles.

Une pièce en « T » excentrée 17 constitue un stabilisateur complémentaire. Elle comporte, par exemple, trois orifices d'adaptation 260, 261, 262, Figure 1. Elle peut recevoir en outre un tube 117 monté sur verrin 217, Figure 6.

Un cadre rectangulaire 18 est fixé sur un col de cygne sensiblement incliné 19, qui comporte à sa base un manchon carré 20 adapté à s'emboîter sur la potence 2 selon les orientations « a, b, c, d », les deux étriers 4 constituant un sas d'emboîtement pour le manchon 20. Le cadre rectangulaire 18 comporte deux guides de mâchoires 21 soudés et adaptés à recevoir, chacun, un profilé carré 22. Chaque profilé peut coulisser et s'immobiliser à l'intérieur de ce guide et comporte à son extrémité une mâchoire 23. De ce fait, chaque profilé peut prendre les trois directions I, II, III (Figure 3) et sert à positionner une cassette, soit sur le cadre rectangulaire, soit sur le bâti, selon la position des mâchoires 23.

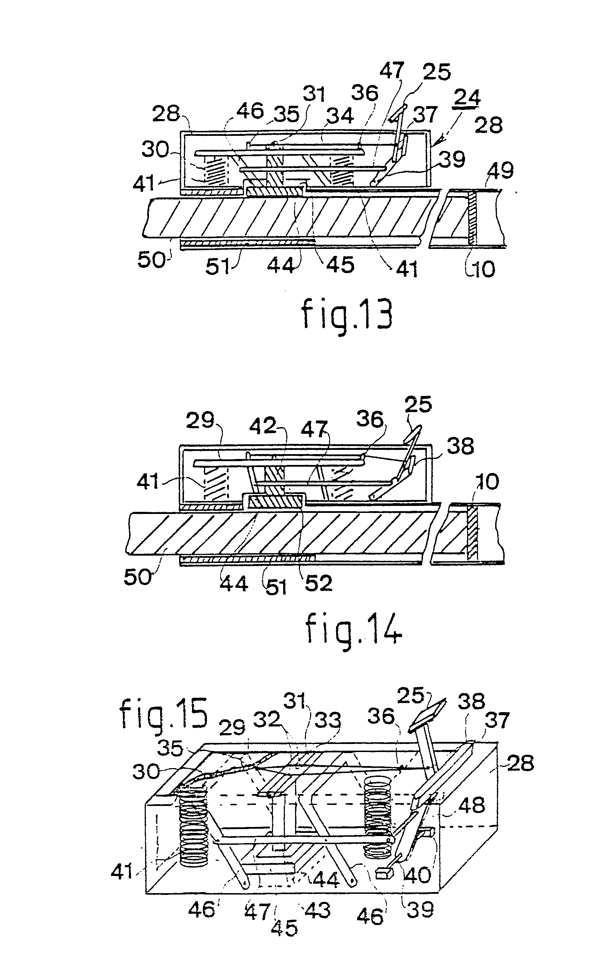

Selon une première variante de l'invention, un élément de serrage permanent 24 comporte un patin de frein 44 pour le blocage des chandelles 9 à l'intérieur du bâti principal 1 pour solidariser le bâti secondaire 8 avec ce bâti principal 1. Un exemple de réalisation de l'élément de serrage 24 est détaillé sur les Figures 13, 14 et 15.

L'élément 24 est représenté en position de blocage permanent sur la Figure 13 et en position de déblocage sur la Figure 14.

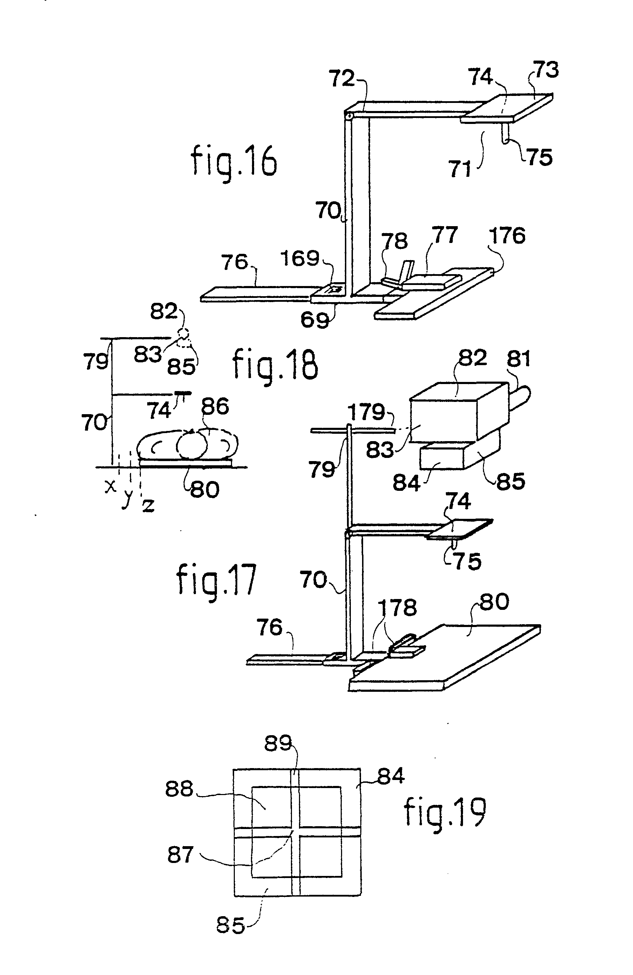

Cet élément 24 comporte (Figure 15) : un carter 28, à l'intérieur de ce carter un rebord constituant une butée 29, un plateau 30 sous lequel est disposé, en son centre, un petit tube 31 comportant à l'intérieur un axe 33 associé à un ressort non visible. Une timonerie constituée par un fil métallique 34, ou plastique, est passée sous un œillet d'ancrage 35. L'axe 33 est plaqué sous la butée 29 par le moyen du ressort qu'il comporte. L'élément de serrage 24 comporte en plus une poulie de guidage 36, un ancrage 37 du fil 34 au levier de commande 25 associé à un second levier de commande 38. Ce second levier pivote à sa base par le moyen d'un axe 39, reposant sur des coussinets 40. Deux ressorts de compression 41 sont disposés aux deux extrémités sous le plateau 30. En dessous de ce plateau et en son centre, est fixé un pied 42, sous lequel est soudée une platine 43. Cette platine reçoit un patin de frein de type « néoprène » 44 pouvant s'escamoter dans une chambre 45. Une came 46 est actionnée par la bielle 47, elle-même entraînée par le moyen d'un axe 48.

Un profilé carré 49 reçoit l'élément de serrage tel que décrit ci-dessus. A l'intérieur du profilé fixe 49 coulisse un autre profilé 50 qui est, par exemple, l'extrémité d'une chandelle 9, sur un manchon 51 qui est fixé à l'intérieur du profilé 49 comportant une fenêtre 52.

L'élément de serrage peut aussi être adapté à des profilés ronds. Dans ce cas, la bague de guidage, Figure 8, comporte une fenêtre 252 et un patin de frein 55 de forme en portion de cylindre. Cette disposition d'élément de serrage 25 peut équiper, par exemple, l'extrémité 26 de la jambe de force.

Selon une seconde variante, un dispositif de serrage permanent comporte quatre patins de frein 7 situés sur le profilé qui coulisse 202 à l'intérieur d'un autre profilé fixe 201. Le mécanisme étant situé sensiblement au niveau des quatre patins 7, la commande de déblocage est située sur le pôle supérieur du tube de coulissement.

Ce dispositif comporte (Figures 9-12) un carter 56, quatre canons de siège parallélépipédiques 57, dans lesquels coulissent les patins de frein 7. Chaque patin est guidé dans son canon par une languette 58, cette languette étant attelée par une goupille dans une mortaise 59 d'une came 60 en forme de tronc de cône. Un ressort de suspension 61, au centre duquel est fixé un guide 161, agit entre la base 62 du carter 56 et la base de la came 60. Lorsqu'on met le ressort en compression pour libérer le blocage, les quatre patins rentrent à l'intérieur des canons, Figures 11 et 12. Deux rondelles 63 sont disposées sur la partie supérieure du cône pour former une butée de limitation de fin de course contre la paroi du carter 56.

Une tringle de type corde à piano 65 traverse le carter 56 et se loge sur la partie supérieure du cône. Cette tringle traverse la contre-plaque 66 et vient en butée sous un bouton poussoir 3 disposé dans un boîtier 67, un ressort 68 agissant sur le bouton poussoir 3 pour tendre à le repousser.

Le dispositif de radiographie comporte aussi des moyens permettant de bien pointer la plaque de radiographie par rapport à la source, malgré les conditions de réalisation de la radiographie.

Suivant la forme de réalisation choisie et représentée Figure 16, l'outil de réglage des paramètres est un trusquin avec miroir à réflexion infinie.

L'outil de réglage comporte un pied 69 supportant une équerre 70 à la partie supérieure de laquelle est disposée une platine 71 entourée d'un cadre de protection 73 dans lequel est placé un miroir à réflexion totale 74.

Sous la platine 71, est fixé un index de repérage de centrage anatomique 75. Le pied 69 est apte à coulisser sur une règle 76 comportant des index 169 de repérage de format de cassette. Un niveau d'horizontalité peut être prévu entre le pied 69 et la base du socle en double équerre 176. Une mâchoire de serrage de cassette 77 est commandée par le moyen de deux leviers 78, le serrage étant réalisé par deux excentriques non représentés sur les Figures.

La Figure 17 montre le moyen de positionner une cassette 80 située dans l'espace et mise en association avec un groupe radiogène comprenant un bras tronqué 81. Ce bras supporte une gaine renfermant le tube radiogène 82 et l'anode 83 d'émission du rayonnement ionisant. Le repérage de hauteur est obtenu par l'index 179 coulissant dans une douille 79, un patient 86 étant interposé entre la cassette 80 et la sortie 88 du rayonnement.

Le système de collimation 84 par centreur lumineux, avec un croisillon 89 centré par rapport au rebord 85, est connu et ne sera pas plus amplement décrit ici. Cependant il est précisé que l'image de renvoi du centre 87 du croisillon 89 par le moyen du miroir 74 permet d'obtenir un parallélisme rigoureux entre la cassette et la source de rayonnement. La Figure 18 est une vue schématique montrant différents positionnements d'une cassette selon trois formats différents x, y, z.

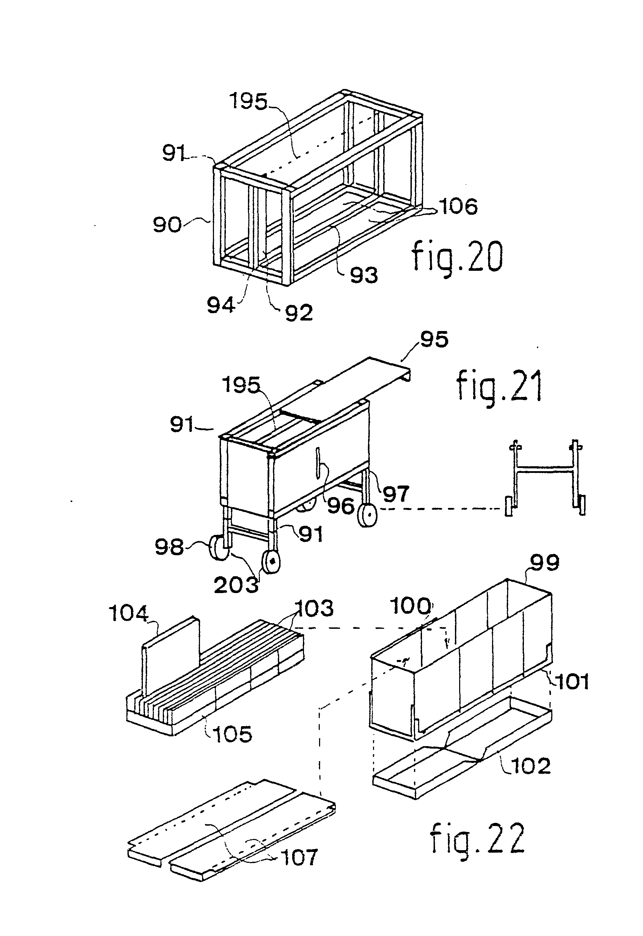

Le stockage, la décontamination et la stérilisation des éléments décrits ci-dessus sont réalisés dans un caisson. Le caisson comporte sur chacune des faces d'une ossature 90 des glissières 92. Une cloison intérieure 195 est fixée sur deux chandelles 94 solidaires des glissières 92 ainsi que sur un longeron 93 reliant des glissières 92 opposées. L'ossature 90, Figure 21, comporte des orifices 91 qui permettent de recevoir, par exemple à la partie supérieure, des éléments modulables. A la partie inférieure, les orifices 91 permettent par exemple de recevoir un train de roulettes 97. Le train de roulettes est avantageusement constitué par deux montants identiques à ceux de la potence décrite en regard de la Figure 3, et comporte un profilé, quatre patins de frein, une contre-plaque de guidage, un bouton poussoir pour débrayer le mécanisme intérieur, des roulettes 98 étant associées aux montants.

Pour la décontamination par jets de détergent germicide fongicide, ou par une exposition aux rayons ultra-violets germicides, on utilise un panier en tiges rigides inoxydables 99, il comporte : une anse principale 100, quatre anses latérales 101 disposées vers la base du panier, en dessous de son centre de gravité, pour permettre son extraction par un quelconque des côtés.

Un plateau articulé 102 est disposé à la base du panier, un second plateau identique est placé sur le dessus du panier pour servir de couvercle. Un double plateau 107 aux angles décolletés s'emboîte sur le fond 106 du caisson, il permet de recevoir le panier 99 et de le retirer avec facilité par un quelconque des côtés. On dispose d'un intercalaire 103 pour la décontamination des cassettes de radiographie. A titre d'exemple, on représente cette disposition à la Figure 22, ainsi que le positionnement de la cassette 104 qui est surélevée par rapport au socle, pour permettre la diffusion du produit vaporisé sur toutes les surfaces à décontaminer. Le caisson peut aussi comporter des panneaux en matériau transparent, selon sa destination et le sens des glissières disposées verticalement.

Le caisson est constitué par six panneaux adaptés à être glissés à l'intérieur des glissières sur chaque face de l'ossature. Les panneaux permettent un accès par n'importe quelle face du caisson.

Sur la partie supérieure, il peut être disposé d'autres éléments selon la destination du caisson.

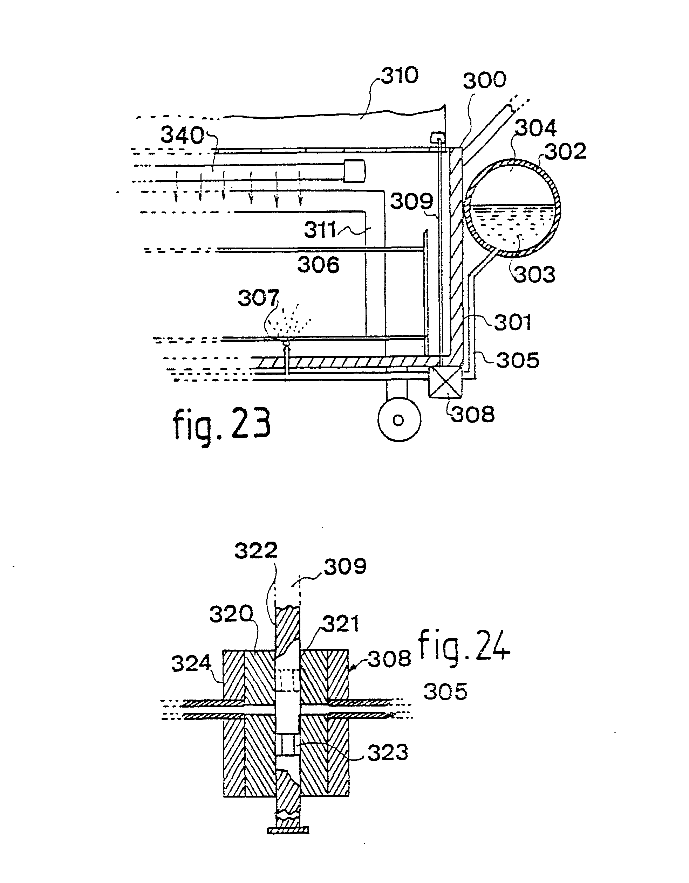

La Figure 23 représente, elle, une vue partielle en coupe du caisson de décontamination. Plus précisément, dans un mode de réalisation avantageux, ce caisson 300 comporte, par exemple sur un côté 301, un volume 302 apte à contenir, par exemple, un fluide 303 qui peut être gazeux ou liquide. Dans ce mode de réalisation illustré, ce fluide 303 est du type liquide et mis sous pression par un fluide gazeux, par exemple un gaz neutre se trouvant au-dessus, en 304, du fluide liquide 303. Ce volume 302 est relié par une conduite 305 à l'intérieur 306 du caisson 300, cette conduite 305 débouchant à l'intérieur 306 du caisson par un injecteur 307 du type gicleur.

Avantageusement, en série dans cette conduite 305, est monté un moyen d'obturation 308, commandable par exemple au moyen d'une tige

309 apte à être commandée en déplacement par le couvercle 310 de ce caisson. En effet, lorsque le couvercle est au moins fermé, le moyen d'obturation 308 permet de mettre en communication le fluide sous pression 303 avec l'injecteur 307, de façon qu'une partie de ce liquide, sous l'action du gaz sous pression 304, soit injectée et se pulvérise à l'intérieur de l'enceinte 306, permettant ainsi de décontaminer les objets se trouvant dans le caisson, comme par exemple une plaque de radiographie schématiquement illustrée en 311.

La Figure 24 montre un exemple de réalisation de ce moyen d'obturation 308 commandable, celui-ci étant constitué, par exemple, par un corps 320 comportant un orifice 321 à l'intérieur duquel est apte à coulisser un piston 322 commandable par la tige 309. Sur ce piston 322 est réalisée, par exemple, une gorge circulaire 323. Ce piston 322 commandé par la tige 309 couplée au couvercle 310 peut donc se translater de façon que, suivant que le couvercle soit ouvert ou fermé, la gorge 323 passe dans le corps 320 en regard de l'intérieur 324 de la conduite 305 permettant de mettre en communication l'intérieur du volume 302 avec l'intérieur 306 du caisson 300. Et, sous l'action de la pression exercée par le gaz 304, une certaine quantité de liquide 303 est pulvérisée à l'intérieur de l'enceinte 306.

Bien entendu, ce mode de réalisation n'a été donné qu'à titre illustratif et il est bien évident que tout autre moyen 308 qui permet d'envoyer des quantités dosées ou non dosées, en fonction par exemple de la durée d'ouverture du caisson, ou d'un autre paramètre quelconque, pourra être utilisé en fonction des différentes applications du dispositif.

De même, il a été illustré un fluide de décontamination liquide. Mais il peut aussi être prévu des fluides de décontamination gazeux, et même lumineux comme celui fournit par une lampe à ultra-violets 340 disposée contre une paroi latérale du caisson et qui est mise sous tension lorsque, par exemple, le couvercle 310 du caisson est fermé. Le rayonnement ultra-violet permet de détruire certains germes bactériens qui peuvent se développer lorsque, par exemple, une plaque radiographique a été mise au contact d'un malade possédant ces germes.

L'utilisation du caisson pour décontaminer le matériel consiste à disposer les éléments mentionnés ci-dessus dans un panier. Dans l'autre panier, on place les cassettes en les maintenant par un intercalaire pour permettre la vaporisation du produit de décontamination, comme par exemple un détergent du groupe des aldéhydes suractivés. Le caisson peut être stérilisé à l'autoclave suivant la même technique que celle utilisée pour l'instrumentation chirurgicale. Le matériel accessoire tel que les roulettes, les béquilles et la pièce en « T » peut être disposé dans un des paniers.

## Revendications

1. Dispositif mobile permettant de réaliser des radiographies en tout lieu et en toute sécurité d'aseptie comportant un trépied, ledit trépied étant constitué d'une pluralité de premiers éléments unitaires assemblables (1, 8, 49, 18, ...) et de moyens commandables (24, 25) pour bloquer lesdits éléments unitaires entre eux pour former ledit trépied, des moyens (1, 23, 18) pour solidariser une cassette de radiographie sur ledit trépied, des moyens (17, 26, 27, 49, ...) pour positionner ledit trépied sur une surface de référence, suivant une orientation donnée, caractérisé par le fait qu'il comporte en outre :

— un caisson (300) constitué de seconds éléments emboîtables (99, 98, 105, 102, 107, ...) ledit caisson ayant des dimensions intérieures déterminées pour enfermer lesdits premiers éléments et/ou au moins une dite cassette de radiographie, et

— des moyens commandables (302, 305, 308, ...) de décontamination de l'intérieur (306) dudit caisson.

2. Dispositif selon la revendication 1, caractérisé par le fait qu'il comporte des moyens de pointage (73, 74, 75, ...) par centreur lumineux de la source de rayonnement de radiographie (81-85) par rapport à ladite cassette de radiographie (80).

3. Dispositif selon la revendication 1, caractérisé par le fait que ledit trépied comporte un bâti principal (1) situé sensiblement dans un premier plan, une potence (2) apte à coulisser dans ledit bâti principal dans un logement longitudinal (201), un cadre de positionnement (18) de cassette, ledit cadre étant fixé sur ladite potence dans un second plan faisant un angle non nul avec le premier, et des moyens orientables (23 pour maintenir au moins une cassette de radiographie, soit sur ledit bâti principal (1), soit sur ledit cadre (18).

4. Dispositif selon la revendication 3, caractérisé par le fait que ledit trépied comporte un bâti secondaire (8), au moins un montant (9) solidaire dudit bâti secondaire (8) et apte à coulisser dans un logement réalisé dans ledit bâti principal (1), et des moyens (24) pour bloquer ledit montant (9) par rapport audit bâti principal.

5. Dispositif selon la revendication 4, caractérisé par le fait qu'il comporte au moins une embase (17) en forme de « T », des moyens (13, 14, 15) pour orienter ladite embase par rapport audit bâti secondaire (8), et des moyens (14, 15) pour bloquer ladite embase (17) par rapport audit bâti secondaire.

6. Dispositif selon l'une des revendications 1 à 5, caractérisé par le fait que ledit caisson est constitué par au moins une ossature (90), un fond (102), un couvercle (107) et des panneaux latéraux, ces trois éléments étant associés à ladite ossature (90) par des moyens de glissières (92) de façon à entourer ladite ossature.

7. Dispositif selon la revendication 6, caractérisé par le fait qu'il comporte un train de roulement, ledit train de roulement comprenant au moins une roulette (98) montée pivotante sur au moins un montant apte à glisser dans un logement (91) réalisé dans ladite ossature (90).

8. Dispositif selon l'une des revendications 1 à 7. caractérisé par le fait que lesdits moyens commandables de décontamination comportent au moins un volume (302) apte à contenir un fluide (303) de décontamination, et des moyens pour commander une injection d'une quantité déterminée dudit fluide à l'intérieur (306) dudit caisson (300).

9. Dispositif selon la revendication 8, caractérisé par le fait que lesdits moyens pour injecter ledit fluide à l'intérieur dudit caisson comportent une conduite (305) reliant ledit volume (302) à l'intérieur (306) dudit caisson (300), ladite conduite débouchant à l'intérieur dudit caisson par un injecteur (307), une vanne (308) insérée en série dans ladite conduite (305), et des moyens pour commander l'ouverture de ladite vanne.

10. Dispositif selon les revendications 6 et 9, caractérisé par le fait que lesdits moyens pour commander l'ouverture de ladite vanne comportent des moyens de couplage (309) entre ledit couvercle (310) dudit caisson (300) et les moyens de commande (322) de ladite vanne, de façon à ouvrir ladite vanne pendant une durée donnée quand ledit couvercle est manipulé à l'ouverture et/ou à la fermeture.

11. Dispositif selon l'une des revendications 1 à 10, caractérisé par le fait que lesdits moyens de décontamination sont constitués par une source (340) d'un rayonnement déterminé par son pouvoir de décontamination, ladite source étant disposée à l'intérieur (306) dudit caisson (300), et des moyens pour commander ladite source de rayonnement à des instants déterminés.

## Claims

1. Movable apparatus for taking X-rays in any location and under aseptic conditions comprising a tripod, said tripod being constituted by a plurality of first unit elements capable of being assembled (1, 8, 49, 18, ...) and controllable means (24, 25) for locking said unit elements relative to one another to form said tripod, means (1, 23, 18) for fixing a X-ray cassette on said tripod, means (17, 26, 27, 49, ...) for positionning said tripod over a reference surface and in a given orientation, characterized by the fact that it comprises furthermore :

— a caisson (300) constituted by second interfitting elements (99, 98, 105, 102, 107, ...), said caisson having inside dimensions which are determined to enclose said first elements and/or at least one of said X-rays cassettes, and

— controllable means (302, 305, 308, ...) for decontaminating the interior (306) of said caisson.

2. Apparatus according to claim 1, characterized by the fact that it includes aiming means (73, 74, 75, ...) for optically centering the source of X-ray radiation (81-85) relative to said X-ray cassette (80).

3. Apparatus according to claim 1, characterized by the fact that said tripod comprises a main structure (1) situated substantially in a first plan, a support (2) suitable for sliding in said main structure in a longitudinal housing (201), a cassette-positionning frame (18), said frame being fixed to said support in a second plan at a non-zero angle with the first plane, and pointable means (23) for holding at least one X-ray cassette, either on said main structure (1) or on said frame (18).

4. Apparatus according to claim 3, characterized by the fact that said tripod includes a secondary structure (8), at least one riser (9) fixed to said secondary structure (8), at least one riser (9) fixed to said secondary structure and suitable for sliding in a housing in said main structure (1), and means (24) for locking said riser (9) relative to said main structure.

5. Apparatus according to claim 4, characterized by the fact that it includes at least one base (17) which is T-shaped, means (13, 14, 15) for pointing said base relative to said secondary structure (8), and means (14, 15) for locking said base (17) relative to said secondary structure.

6. Apparatus according to one of claims 1 to 5, characterized by the fact that said caisson is constituted by at least one framework (90), a bottom (102), a lid (107) and side panels, which three elements are associated with said framework (90) by slide means (92) in such manner as to surround said framework.

7. Apparatus according to claim 6, characterized by the fact that it includes wheel means, said wheel means including at least one wheel (98) pivotally mounted on at least one riser suitable for sliding in a housing (91) maid in said framework (90).

8. Apparatus according to one of claims 1 to 7, characterized by the fact that said controllable decontamination means comprise at least one volume (302) suitable for containing a decontamination fluid (303), and means for controlling injection of a determined quantity of said fluid into the interior (306) of said caisson (300).

9. Apparatus according to claim 8, characterized by the fact that said means for injecting said fluid into the interior of said caisson comprise a duct (305) connecting said volume (302) to the interior (306) of said caisson (300), said duct opening out into the interior of said caisson via an injector (307), a valve (308) being inserted in series in said duct (305), and means for controlling the opening of said valve.

10. Apparatus according to claims 6 and 9, characterized by the fact that said means for controlling the opening of said valve comprise coupling means (309) between said lid (310) of said caisson (300) and the control means (322) of said valve, in such a manner as to open said valve for a given duration when said lid is opened and/or closed.

11. Apparatus according to any one of claims 1 to 10, characterized by the fact that said decontamination means are constituted by a source (340) of a radiation selected for its decontamination power, said source being disposed inside (306) said caisson (300), and means for controlling said source of radiation at determined instants.

**Patentansprüche**

1. Mobile Vorrichtung zum Ausführen von Röntgenaufnahmen an jedem Ort mit voller Sicherheit der Keimfreiheit umfassend ein Dreibein, wobei dieses Dreibein gebildet wird von einer Vielzahl erster montierter Einheitsteile (1, 8, 49, 18, ...) und regulierbarer Mittel (24, 25) zum Festhalten der Einheitsteile untereinander zur Ausbildung des Dreibeins, Mittel (1, 23, 18) zum Anbringen einer Röntgenkassette auf dem Dreibein, Mittel (17, 26, 27, 49, ...) zum Positionieren des Dreibeins auf einer Bezugsfläche gemäß einer gegebenen Orientierung, dadurch gekennzeichnet, daß weiterhin vorgesehen ist :
— ein Caisson (300), gebildet aus zweiten einpaßbaren Teilen (99, 98, 105, 102, 107, ...), wobei der Caisson bestimmte Innenabmessungen besitzt für ein Einschließen der ersten Teile und/oder mindestens einer Röntgenkassette, und
— steuerbare Mittel (302, 305, 308, ...) zur Dekontamination des Inneren (306) des Caisson.

2. Vorrichtung nach Anspruch 1, dadurch gekennzeichnet, daß vorgesehen sind Kontrollmittel (73, 74, 75, ...) durch leuchtende Zentrierer der Röntgenstrahlquelle (81-85) in bezug auf die Röntgenografiekassette (80).

3. Vorrichtung nach Anspruch 1, dadurch gekennzeichnet, daß das Dreibein umfaßt ein Haupttragelement (1) gelegen im wesentlichen in einer ersten Ebene, einen Träger (2), geeignet für ein Verschieben in einem Längsraum (201) in dem Haupttragelement, einen Positionierrahmen (18) der Kassette, wobei der Rahmen an dem Arm befestigt in einer zweiten Ebene, die mit der ersten einen Winkel ungleich Null einschließt und einstellbare Mittel (23) zum Halten mindestens einer Röntgenografiekassette entweder an dem Haupttragelement (1) oder an dem Rahmen (18).

4. Vorrichtung nach Anspruch 3, dadurch gekennzeichnet, daß das Dreibein umfaßt ein zweites Tragelement (8), mindestens einen Holm (29) aus einem Stück des zweiten Tragelements (8) und geeignet in einem in dem Haupttragelement (1) vorgesehenen Raum verschoben zu werden und Mittel (24) zum Feststellen des Holms (9) in bezug auf das Haupttragelement.

5. Vorrichtung nach Anspruch 4, dadurch gekennzeichnet, daß vorgesehen ist mindestens ein Fuß (17) in Form eines « T », Mittel (13, 14, 15) zum Ausrichten des Fußes in bezug auf das zweite Tragelement (8), und Mittel (14, 15) zum Feststellen des Fußes (17) in bezug auf das zweite Tragelement.

6. Vorrichtung nach einem der Ansprüche 1 bis 5, dadurch gekennzeichnet, daß der Caisson gebildet wird von mindestens einem Geripppe (90), einem Boden (102), einem Deckel (107) und Seitenpaneelen, wobei diese drei Teile mit dem Gerippe (90) verbunden sind durch Führungsmittel (92) dergestalt, daß das Gerippe eingefaßt ist.

7. Vorrichtung nach Anspruch 6, dadurch gekennzeichnet, daß vorgesehen ist ein Laufgestell, wobei das Laufgestell mindestens eine Rolle (98) umfaßt, die drehbar befestigt ist an mindestens einem Holm, angepaßt zum Gleiten in einem in dem Gerippe (90) vorgesehenen Raum (91).

8. Vorrichtung nach einem der Ansprüche 1 bis 7, dadurch gekennzeichnet, daß die steuerbaren Mittel zur Dekontamination umfassen mindestens ein Volumen (302) zur Aufnahme eines Dekontaminationsfluids (303), und Mitteln zum Steuern eines Spritzvorganges mit einer bestimmten Menge des Fluids in den Innenraum (306) des Caisson (300).

9. Vorrichtung nach Anspruch 8, dadurch gekennzeichnet, daß die Mittel zum Spritzen des Fluids in den Innenraum des Caisson umfassen eine Leitung (305), die das Volumen (302) mit dem Innenraum (306) des Caisson (300) verbindet, wobei die Leitung über eine Düse (307) in den Innenraum des Caisson mündet, und ein hintereinander in die Leitung (305) eingesetztes Ventil (308) und Mittel zum Steuern der Öffnung des Ventils.

10. Vorrichtung nach Anspruch 6 und 9, dadurch gekennzeichnet, daß die Mittel zum Steuern des Öffnens des Ventils umfassen Schaltungsmittel (309) unter der Abdeckhaube (310) des Caisson (300) und Steuermittel (322) des Ventils derart, daß das Ventil geöffnet ist während einer gegebenen Dauer, wenn die Abdeckhaube zum Öffnen und Schließen manipuliert wird.

11. Vorrichtung gemäß einem der Ansprüche 1 bis 10, dadurch gekennzeichnet, daß die Mittel zur Dekontamination gebildet werden von einer Quelle (340) einer Strahlung, die durch ihre Fähigkeit zur Dekontamination bestimmt ist, wobei die Quelle im Innenraum (306) des Caisson (300) angeordnet ist, und Mittel zum Steuern der Strahlungsquelle in bestimmten Zeitpunkten.

fig.1

fig.2

fig.3

fig.5

fig.4

2

fig.6

fig.7

fig.8

fig.11

fig.9

fig.12

fig.10

fig.13

fig.14

fig.15

fig.16

72

74

73

71

75

70

76

169

78

77

176

69

82

83

85

79

fig.18

70

74

86

82

81

179

83

79

84

85

74

75

fig.17

70

76

178

80

x

y

z

80

89

88

84

87

fig.19

85

195
91
90
106
94 92
93

fig.20

95

fig.21

195
91
98
203
96 97
91

104
103
100
99

105
101
102
107

fig.22

fig. 23

fig. 24